# EUROPEAN PATENT SPECIFICATION

(11) **EP 2 449 750 B1**
(45) Date of publication and mention of the grant of the patent: **27.11.2013**
(21) Application number: 10740148.1
(22) Date of filing: 05.07.2010
(51) Int. Cl.: H04L 29/12

(54) **Method and network for managing port ranges**
Verfahren und Netzwerk zur Verwaltung von Portbereichen
Procédé et réseau pour la gestion de tranches de ports

(30) Priority: 03.07.2009 EP 09008747
(43) Date of publication of application: 09.05.2012
(73) Proprietor: NEC Europe Ltd., 69115 Heidelberg (DE)
(72) Inventor: QUITTEK, Juergen, 69226 Nussloch (DE); BRUNNER, Marcus, 69181 Leimen (DE)
(74) Representative: Ullrich & Naumann
(86) International application number: PCT/EP2010/004019
(87) International publication number: WO 2011/000577

(56) References cited:
- BOUCADAIR M ET AL: "DHCP Options for Conveying Port Mask and Port Range Router IP Address; draft-boucadair-dhc-port-range-01.txt", DHCP OPTIONS FOR CONVEYING PORT MASK AND PORT RANGE ROUTER IP ADDRESS; DRAFT-BOUCADAIR-DHC-PORT-RANGE-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 30 October 2008 (2008-10-30), XP015057391, cited in the application
- BUSH INTERNET INITIATIVE JAPAN O MAENNEL DEUTSCHE TELEKOM LABORATORIES J ZORZ GO6 SI S BELLOVIN COLUMBIA UNIVERSITY L CITTADINI UN: "The A+P Approach to the IPv4 Address Shortage; draft-ymbk-aplusp-03.txt", THE A+P APPROACH TO THE IPV4 ADDRESS SHORTAGE; DRAFT-YMBK-APLUSP-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 3, 9 March 2009 (2009-03-09), XP015061905, cited in the application
- BOUCADAIR M ET AL: "Port Range Configuration Options for PPP IPCP; draft-boucadair-pppext-portrange-option-00 .txt", PORT RANGE CONFIGURATION OPTIONS FOR PPP IPCP; DRAFT-BOUCADAIR-PPPEXT-PORTRANGE-OPTION-00 .TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 5 February 2009 (2009-02-05), XP015060444, cited in the application

## Description

The present invention relates to a method for operating a network according to the preamble part of claim 1.

Further, the present invention relates to a network according to the preamble part of claim 15.

Methods for operating a network and according networks of the above mentioned type are known from multiple use cases. With regard to such methods and networks there is existing a general aim to enlarge the address space using parts of port numbers. The IETF (Internet Engineering Task Force) has started discussing a scheme for enlarging the IP address space using parts of the port numbers, similar to what Network Address Translators (NAT) do, see M. Boucadair, J-L. Grimault, P. Levis, A. Villefranque: DHCP Options for Conveying Port Mask and Port Range Router IP Address, Internet draft, draft-boucadair-dhc-port-range-01,txt. This allows to assign the same IP address to several customers (HGWs - Home Gatways) or hosts and differentiate the routing and forwarding based on the IP address and part of the port numbers of that communication.

So far the IETF has proposed a DHCP (Dynamic Host Configuration Protocol) extension and PPP (Point-to-Point Protocol) extensions to assign IP address and port ranges to hosts and sites, see M. Boucadair, P. Levis, G. Bajko, T. Savolainen: IPv4 Connectivity Access in the Context of IPv4 Address Exhaustion, Internet draft, draft-boucadair-port-range-01.txt and O. Maennel, R. Bush, L. Cittadini, S. Bellovin: The A+P Approach to the IPv4 Address Shortage, Internet draft, draft-ymbk-aplusp-03.txt. However, since the deployments are very different for different users, customers with several users etc., more means for managing port assignment appear to be required. Measurements showed that different clients need different range sizes at different times. This implies that dynamic port range assignment seems to be needed for
- assigning larger port ranges to clients when the current one becomes too small,
- assigning smaller port ranges to clients, when the current one is underused,
- changing port ranges of clients for reducing fragmentation of the port space.

The existing means are sufficient to assign and re-assign port ranges. However, a client cannot immediately switch from one port range to another one, because most applications cannot change port numbers while using them. Without interrupting existing connections, a client can only start allocating new ports in a new range and wait until ports in an old range are not used anymore. Consequently, a client needs to wait until applications have closed all ports in the old port range.

Further details regarding port range configuration options for PPP are obtainable from M. Boucadair, P. Levis, J-L. Grimault, A. Villefranque: Port Range Configuration Options for PPP IPCP, Internet draft, draft-boucadair-pppext-portrange-option-00.txt.

Further, US 7,031,275 is explaining an address management for mobile nodes.

It is an object of the present invention to improve and further develop a method for operating a network and an according network for allowing an efficient use of available port space without requesting clients to Interrupt ongoing sessions.

in accordance with the invention, the aforementioned object is accomplished by a method comprising the features of claim 1 and a network comprising the features of claim 15.

According to the invention it has been recognized that by marking one or more port ranges with an attribute that signals to the client not to allocate any more ports or port numbers in marked port ranges a simple identification of one or more port ranges is possible that should not be used anymore by the client. By the use of such an attribute the client is informed about port ranges which shall no longer be used and can stop allocating any more ports or port numbers in marked port ranges. Thus, specific port ranges can be disabled gradually. The marking will be performed by the manager as instance which Is responsible for address and/or port range assignment. By such a specific and dynamic port range management a very efficient use of available port space can be performed without requesting clients to interrupted ongoing sessions.

While the client is using a port range, several reasons may occur that make it desirable to change an actual assignment. There could be a situation that the client is observing that there are only few unused numbers left in the used port range and that it may soon happen that no further port numbers would be available for requesting applications. In order to avoid this situation, the client could request an assignment of more port numbers at the manager.

According to the present invention a reassignment process is initiated by the manager in response to any according information received by the manager.

The manager monitors the usage of ports or port numbers by a client or by the clients and can detect that there are only a few unused port numbers left in the port range assigned to the client. In this situation the manager can decide to assign a wider port range to the client before port numbers run out. In another situation the manager can detect that the client is only using a small part of the port range assigned to him and can decide to assign the client a smaller port range.

Within another situation the manager could monitor a degree of fragmentation of a port space formed by the ports or port numbers and/or of an address space formed by the network addresses. In this situation the manager could identify a need to reassign the port range of the client in order to reduce fragmentation of the port and/or address space.

For providing a very simple reassignment the manager could send a message to the client, the message containing at least one port range marked with the attribute or containing at least two port ranges, the originally assigned port range marked with the attribute and at least one new port range. The at least one new port range will form the port range or port ranges to be used from now on.

Within a further preferred embodiment of the invention the manager could define a time period until which the originally assigned port range is still valid. After said time period the originally assigned port range could definitely expire.

For simply informing the client about the invalidity of a port range the manager could signal to the client that a port range is no longer assigned to the client. Such a signalling could be initiated if the manager is detecting that no port number of the originally assigned port range is in use anymore.

On the other hand the client could signal to the manager that a port range is no longer in use. In other words the client could send an explicit signal to the manager that it is not using the initial port range anymore and that the manager can assign it to other clients.

Within a further preferred embodiment the method according to the invention can also be used for reducing or trimming already assigned port ranges. In such a case the manager could divide a single port range into two or more consecutive port ranges. Then, the manager could reassign the single port range as a set of port ranges to the client with one or more of the port ranges marked with the attribute, i.e. as not to be used anymore. After such a reassignment the client could signal back that one or more ranges are not used anymore.

Within a preferred embodiment the manager or an according manager function could be provided at a BRAS (Broadband Remote Access Server). In other words, a broadband operator could manage an IP address and port range manager for broadband access, wherein the manager could be provided at a BRAS.

In other embodiments the manager or an according manager function could be provided at a MSAN (Multi Service Access Node) or DSLAM (Digital Subscriber Line Access Multiplexer).

Another preferred embodiment of the invention could be realized in a scenario wherein the manager or an according manager function could be provided at a SGSN (Serving GPRS Support Node) or GGSN (Gateway GPRS Support Node) within mobile networks.

Depending on the individual scenario the client could be a home router or the gateway of a large enterprise. Further, the client could be located on a UE (User Equipment).

When operating as a home router the client could act as NAT (Network Address Translator) for devices within a home network.

For providing a very comfortable and reliable method for operating a network policies could be configured into the client and/or the manager for customized handling of the assignment or reassignment process. Preferably, the policies could define an individually available port range or port number of a client. Such an individually available port range or port number of a client could depend on the client status. Good clients or clients which are paying more than other clients could request higher numbers of ports, for example.

Within a further preferred embodiment the policies could define a usage level, at which the client is allowed to request for a larger port range than originally assigned.

The signalling between a client and the manager could be done through different or various protocols. Within a concrete embodiment a signalling between the client and the manager could be performed by DHCP (Dynamic Host Configuration Protocol) extensions, PPP (Point-to-Point Protocol) extensions, Web Services, TR-69 (Technical Report 069) or another protocol for address and port pool management. The used protocol could be dependent on the individual use case.

Within a concrete embodiment Port Mask DHCP option could contain a Mask Flags (MF) field for marking a port range with the attribute. Such a Mask Flags (MF) field could have a length of one or two bytes.

In practise the Mask Flags (MF) field could contain a flag for the manager (MD) for indicating to the client not to allocate any more ports or port number in the respective port range. Additionally or alternatively the Mask Flags (MF) field could contain a flag for the client (MA) for indicating to the manager that the port range is not in use anymore.

Within a simple embodiment the same flag could be used for indicating by the manager to the client not to allocate any more ports or port numbers in the respective port range and for indicating by the client to the manager that the port range is not in use anymore. However, using different flags would have the advantages of cleaner and more flexible signalling.

Within another preferred embodiment a Port Mask DHCP option with a definable DID (DHCP option ID) or two definable DIDs could be used for indicating by the manager to the client not to allocate any more ports or port numbers in the respective port range and for indicating by the client to the manager that the port range is not in use anymore. In this case one or two new DIDs could be assigned. One DID for both purposes would be possible, but preferably, two DIDs should be assigned, one for signalling that a range is not to be used anymore and one for signalling that a range is not in use anymore.

Within a further preferred embodiment a definable PPP (Point-to-Point Protocol) IPCP (Internet Protocol Configuration Protocol) option, preferably a Port Range Usage (PRU) Option with two additional flags, could be used for indicating by the manager to the client not to allocate any more ports or port number in the respective port range and for indicating by the client to the manager that the port range is not in use anymore.

The present invention allows to postpone the deallocation of port ranges until the respective ports are closed. The client has the possibility to actively confirm the release of port ranges.

A user can actively close all ports in anticipation of an exceeding demand of ports from new applications to be started. All ports are released voluntarily in expectation of goodwill to get a larger port range assigned.

The client could carry out a partial release of a requested port range, hence splitting the port range in used and unused ports.

The present invention is providing a dynamic port range assignment or reassignment.

According to the present invention marking of a port range in a message to the client as not to be used anymore is possible. According to a further aspect of the invention sending a signal from the client that a port range is not in use anymore and configuring policies into the client and the server for customized handling of the different cases and defining the behaviour of giving out port ranges is preferred.

Thus, address and port range managers can more efficiently and flexibly manage the address and port number space, unused port ranges can more quickly be used again and therefore the one achieves a multiplexing gain, and fragmentation of port number space can be reduced.

The invention is providing means for marking a port range size as not to be used anymore and is providing means for a client to signal a port range ready to be reassigned.

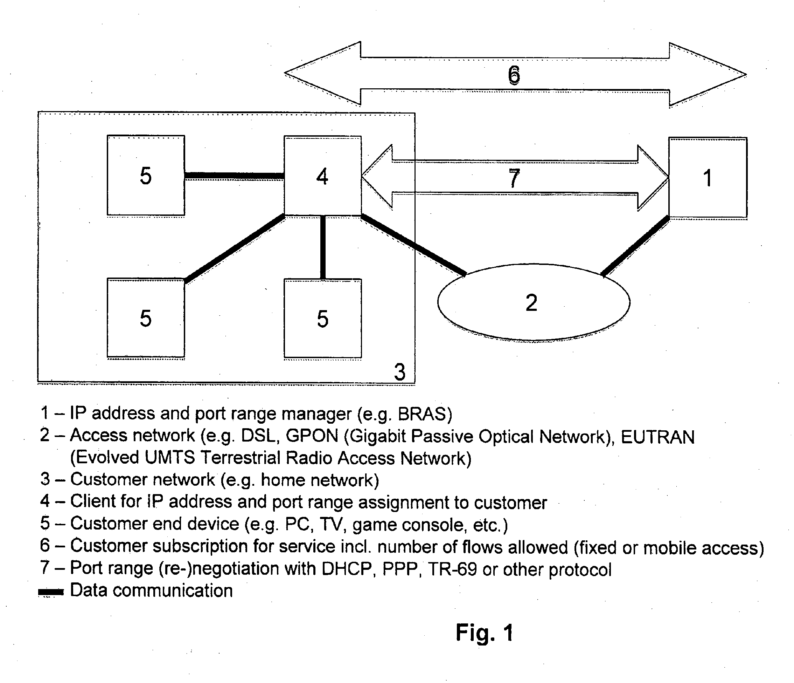

There are several ways how to design and further develop the teaching of the present invention in an advantageous way. To this end, it is to be referred to the patent claims subordinate to patent claim 1 on the one hand, and to the following explanation of preferred examples of embodiments of the invention, illustrated by the drawing on the other hand. In connection with the explanation of preferred embodiments of the invention by the aid of the drawing, generally preferred embodiments and further developments of the teaching will we explained. In the drawing
- Fig. 1: is illustrating an embodiment of a method for operating a network according to the invention.

An embodiment of the invention provides a way for a port range assignment server to tag a port range with an attribute that signals the client not to allocate any more ports in this range. Such a signal can be sent when a server signals more than one port range to a client. A most simple embodiment would be adding a flag to one or more port ranges during the (re-)assignment process that marks these ranges as not to be used anymore. A client receiving the signal would then stop allocating port numbers in the marked ranges. When the client does not use an address range anymore, it signals back that the port range is not in use anymore and can be re-assigned. This can be done individually for each range as soon as it is not used anymore or at once when all marked ranges are not used anymore.

The method can also be used for reducing - trimming - already assigned port ranges. For this purpose, the server divides the single port range into two or more consecutive port ranges and reassigns the single port range as a set of port ranges to the client with one or more of the port ranges marked as not to be used anymore. Again, the client would signal back that one or more ranges are not used anymore.

A concrete embodiment according to Fig. 1 is based on the following scenario. A Broadband Operator manages an IP address and port range manager for broadband access provisioned at a BRAS (Broadband Remote Access Server). The client would be a home router allocating port numbers when acting as NAT for the devices in the home network.
1) When a client requests an IP address with a port range including the number of ports, the BRAS assigns it and signals the assigned port range to the client. The port range specified by the client could be a preferred port range indicated by a min value and a max value of the port range or just the number of ports.
2) While the client is using the port range, several reasons may occur that make it desirable to change the assignment.
   a. The client may observe that there are only few unused numbers left in the used range and that it may soon happen that no further port numbers would be available for requesting applications. In order to avoid this situation, the client requests an assignment of more port numbers at the BRAS.
   b. The BRAS may monitor usage of port numbers by the clients and detect that there are only a few unused port numbers left in the range assigned to the client. It decides to assign a wider range to the client before port numbers run out.
   c. The BRAS may detect that the client is only using a small part of the port range assigned to him and decide to assign the client a smaller port range.
   d. The BRAS may identify a need to re-assign the port range of the client in order to reduce fragmentation of the port and address space
3) The BRAS sends a message to the client. The message contains two port ranges, the originally assigned one with a mark not to use it anymore and a new range to be used from now on.
   a. Optionally, it can also give a time until when the old port range is still valid, before it will definitely expire.
4) The client only allocates new port numbers in the new range.
5) Either the BRAS detects that no port number of the initial port range is in use anymore - through monitoring - and signals to the client that the initially assigned range is not anymore assigned to the client. Or the client send an explicit signal that it is not using the initial range anymore and the BRAS can assign it to other clients.

In other embodiments, the IP address and port range manager can be located at a MSAN/DSLAM (Multi Service Access Node/Digital Subscriber Line Access Multiplexer), or any other infrastructure equipment. A client may also be a single host or the gateway of a large enterprise. The scheme also applies to mobile networks, where the server is located on the SGSN (Serving GPRS Support Node) or GGSN (Gateway GPRS Support Node), and the client on a UE (User Equipment).

The signaling between client and server can be done through different protocols including DHCP extensions, PPP extensions, Web Services, TR-69, or another protocol for address and port pool management.

The process on the BRAS for deciding on how many ports to give away is based on policies configured into the BRAS from a management station. That might depend on the customer status. Good customers, customer paying more, etc. might request higher numbers. Also it can depend on the current level of free addresses and ports. When there are only a few ports left, the IP address and port range manager will give out port ranges more restrictive. Also the mechanisms according to step 5) above, requires configuration on the BRAS to behave in one or the other way, also including the configuration of the client.

The policies will also be configured into the client. Those policies tell the client how large of a space he is allowed to request, at what usage level the client should ask for more port space (see step 2a above). For example that can be if only 80% of the ports are used, the client asks already for more, or the client only asks for more if he fully used up his space.

An embodiment of DHCP signaling can be based on the already mentioned reference: M. Boucadair, J-L. Grimault, P. Levis, A. Villefranque: DHCP Options for Conveying Port Mask and Port Range Router IP Address, Internet draft, draft-boucadair-dhc-port-range-01.txt. In this reference a new Port Mask DHCP option for port range signaling is suggested. The format of the Port Mask DHCP option is:

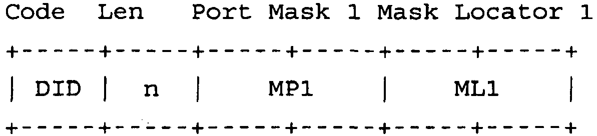

The DHCP Option ID (DID) identifies the option as the one used for port range signaling. For each port range a pair of a Port Mask (MP) and a Mask Locator (ML) is contained. Length n indicates the number of bytes contained. Length n is always a multiple of 4, because each MP and ML have a length of 2 bytes. For signaling port ranges not to be used or not in use anymore, a new option can be used that in addition to MP and ML contains a Mask Flags (MF) field:
Alternative 1 (one byte MF) 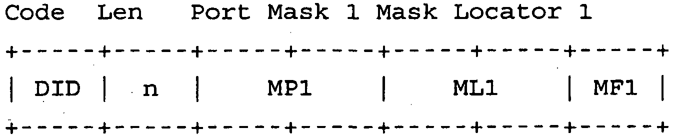
Alternative 2 (two byte MF)

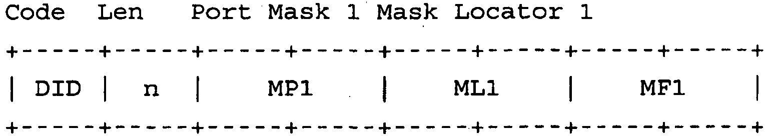

The MF field could be defined to have a length of one byte or two bytes. The length n would then always be a multiple of 5 or 6, respectively. The MF field contains a flag for the server (MD) for indicating to the client that the range is not to be used anymore, and a flag for the client (MA) for indicating to the server that the range is not in use anymore. In order to save flags, the same flag could be used for both purposes, although using different flags would have the advantages of cleaner and more flexible signaling.

An embodiment of the one byte MF flag field would be 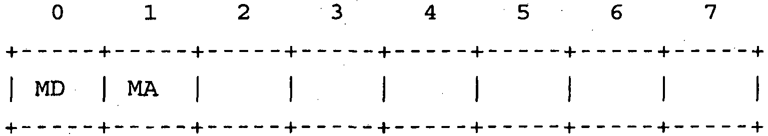
Bit 0: MD flag
Bit 1: MA flag

Instead of adding a flag field to the port range signaling DHCP Option, another DHCP Option with another DID, but the same format as suggested in the last mentioned reference can be used. In this case one or two new DIDs need to be assigned. One DID for both purposes would be possible, but preferably, two new DIDs would be assigned, one for signaling that a range is not to be used any more and one for signaling that a range is not in use anymore.

In case of port range signaling using PPP as described in the already mentioned reference: M. Boucadair, P. Levis, J-L. Grimault, A. Villefranque: Port Range Configuration Options for PPP IPCP, Internet draft, draft-boucadair-pppext-portrange-option-00.txt, a new PPP IPCP (IP Configuration Protocol) option needs to be defined. An embodiment would be a Port Range Usage (PRU) Option with the following format:

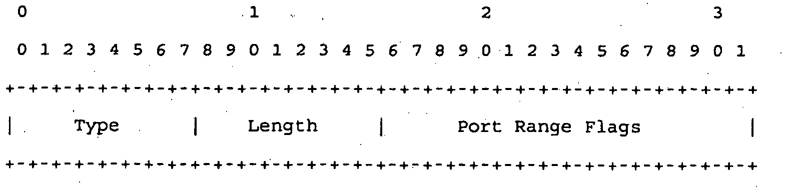

Analogously to the description of the DHCP extension above, two new flags would be defined:
Bit 16: MD flag
Bit 17: MA flag

IPCP configure requests and acknowledgements as described in the last mentioned reference will then have an PRU option in addition to the PRV (Port Range Value) and the PRM (Port Range Mask) option that describe the port range.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for operating a network, wherein a network address and at least one port range associated to the network address and comprising ports or port numbers are assigned to a client by an address and/or port range manager (1) and wherein one or more port ranges is marked by the manager (1) with an attribute that signals to the client not to allocate any more ports or port numbers in marked port ranges,
**characterized in that** the manager (1) is monitoring the usage of ports or
port numbers by a client and the marking is performed during a reassignment process initiated by the manager (1) in response to information obtained from such monitoring.

2. A method according to claim 1, wherein the manager (1) is monitoring a degree of fragmentation of a port space formed by the ports or port numbers and/or
of an address space formed by the network addresses and/or
wherein the manager (1) sends a message to the client, the message containing at least one port range marked with the attribute or the message containing at least two port ranges, the originally assigned port range marked with the attribute and at least one new port range.

3. A method according to claim 1 or 2, wherein the manager (1) defines a time period until which the originally assigned port range is still valid and/or
wherein the manager (1) signals to the client that a port range is no longer assigned to the client.

4. A method according to one of claims 1 to 3, wherein the client signals to the manager (1) that a port range is no longer in use.

5. A method according to one of claims 1 to 4, wherein the manager (1) divides a single port range into two or more consecutive port ranges.

6. A method according to one of claims 1 to 5, wherein the manager (1) or an according manager function is provided at one of a BRAS, Broadband Remote Access Server, or a MSAN, Multi Service Access Node, or DSLAM, Digital Subscriber Line Access Multiplexer, or a SGSN, Serving GPRS Support Node, or GGSN, Gateway GPRS Support Node.

7. A method according to one of claims 1 to 6, wherein the client is a home router or the gateway of a large enterprise or wherein the client is located on a UE, User Equipment.

8. A method according to one of claims 1 to 7, wherein policies are configured into the client and/or the manager (1) for customized handling of the assignment or reassignment process,
wherein the policies define a usage level, at which the client is allowed to request for a larger port range.

9. A method according to one of claims 1 to 8, wherein a signalling between the client and the manager (1) is performed by DHCP, Dynamic Host Configuration Protocol, extensions, PPP, Point-to-Point Protocol, extensions, Web Services, TR-69, Technical Report 069, or another protocol for address and port pool management.

10. A method according to claim 9, wherein the signalling between the client and the manager is performed by DHCP extensions and a Port Mask DHCP option is containing a Mask Flags, MF, field for marking a port range with the attribute.

11. A method according to claim 10, wherein the Mask Flags, MF, field has a length of one or two bytes.

12. A method according to claim 10, wherein the Mask Flags, MF, field contains a flag for the manager, MD, for indicating to the client not to allocate any more ports or port numbers in the respective port range and/or
wherein the Mask Flags, MF, field contains a flag for the client, MA, for indicating to the manager (1) that the port range is not in use anymore and/or
wherein the same flag is used for indicating by the manager (1) to the client not to allocate any more ports or port numbers in the respective port range and for indicating by the client to the manager (1) that the port range is not in use anymore.

13. A method according to claim 9, wherein the signalling between the client and the manager is performed by DHCP extensions and a Port Mask DHCP option with a definable DID, DHCP Option ID, or two definable DIDs is used for indicating by the manager (1) to the client not to allocate any more ports or port numbers in the respective port range and for indicating by the client to the manager (1) that the port range is not in use anymore.

14. A method according to claim 9, wherein the signalling between the client and the manager is performed by PPP extensions and a definable PPP, Point-to-Point Protocol, IPCP, Internet Protocol Configuration Protocol, option is used for indicating by the manager (1) to the client not to allocate any more ports or port numbers in the respective port range and for indicating by the client to the manager (1) that the port range is not in use anymore.

15. A network, wherein a network address and at least one port range associated to the network address and comprising ports or port numbers are assigned to a client by an address and/or port range manager (1), the network comprising means for marking one or more port ranges by the manager (1) with an attribute that signals to the client not to allocate any more ports or port numbers In marked port ranges,
**characterized by** means for monitoring a client's usage of ports or port numbers by the manager (1) and means for performing the marking during a reassignment process initiated by the manager (1) in response to information obtained from such monitoring.

## Patentansprüche

1. Ein Verfahren zum Betreiben eines Netzwerks, wobei eine Netzwerkadresse und zumindest ein Portbereich, der der Netzwerkadresse zugeordnet ist und Ports oder Portnummern aufweist, mittels eines Adress- und/oder Portbereich-Managers (1) einem Client zugeordnet sind und wobei ein oder mehrere Portbereiche durch den Manager (1) mit einem Attribut markiert werden, das dem Client signalisiert, nicht irgendwelche weiteren Ports oder Portnummern in markierten Portbereichen zu vergeben,
**dadurch gekennzeichnet, dass** der Manager (1) die Verwendung von Ports oder Portnummern durch einen Client überwacht und das Markieren als Reaktion auf von solchem Überwachen erhaltene Information während eines durch den Manager (1) initiierten Neuzuordnungsprozesses durchgeführt wird.

2. Ein Verfahren nach Anspruch 1, wobei der Manager (1) einen Grad an Fragmentation eines Portraums, der durch die Ports oder Portnummern gebildet ist, und/oder eines Adressraums, der durch die Netzwerkadressen gebildet ist, überwacht und/oder
wobei der Manager (1) eine Mitteilung an den Client sendet, wobei die Mitteilung zumindest einen mit dem Attribut markierten Portbereich enthält oder die Mitteilung zumindest zwei Portbereiche enthält, den ursprünglich zugeordneten Portbereich, der mit dem Attribut markiert ist, und zumindest einen neuen Portbereich.

3. Ein Verfahren nach Anspruch 1 oder 2, wobei der Manager (1) eine Zeitdauer definiert, innerhalb welcher der ursprünglich zugeordnete Portbereich noch gültig ist, und/oder
wobei der Manager (1) dem Client signalisiert, dass ein Portbereich nicht länger zu dem Client zugeordnet ist.

4. Ein Verfahren nach einem der Ansprüche 1 bis 3, wobei der Client dem Manager (1) signalisiert, dass ein Portbereich nicht länger verwendet wird.

5. Ein Verfahren nach einem der Ansprüche 1 bis 4, wobei der Manager (1) einen einzelnen Portbereich in zwei oder mehrere aufeinanderfolgende Portbereiche aufteilt.

6. Ein Verfahren nach einem der Ansprüche 1 bis 5, wobei der Manager (1) oder eine entsprechende Managerfunktion an einem BRAS, Broadband Remote Access Server, oder einem MSAN, Multi Service Access Node, oder DSLAM, Digital Subscriber Line Access Multiplexer, oder einem SGSN, Serving GPRS Support Node, oder GGSN, Gateway GPRS Support Node, bereitgestellt wird.

7. Ein Verfahren nach einem der Ansprüche 1 bis 6, wobei der Client ein Heimrouter oder das Gateway eines großen Unternehmens ist oder wobei der Client an einem UE, User Equipment, angeordnet ist,

8. Ein Verfahren nach einem der Ansprüche 1 bis 7, wobei in den Client und/oder den Manager (1) Richtlinien zum individuellen Behandeln des Zuordnungs- oder Neuzuordnungsprozesses konfiguriert werden,
wobei die Richtlinien einen Nutzungsgrad definieren, bei dem der Client einen größeren Portbereich anfordern darf.

9. Ein Verfahren nach einem der Ansprüche 1 bis 8, wobei ein Signalisieren zwischen dem Client und dem Manager (1) mittels DHCP, Dynamic Host Configuration Protocol, -Erweiterungen, PPP, Point-to-Point Protocol, -Erweiterungen, Web-Services, TR-69, Technical Report 069, oder eines anderen Protokolls für das Adress- und Portvorrat-Management durchgeführt wird.

10. Ein Verfahren nach Anspruch 9, wobei das Signalisieren zwischen dem Client und dem Manager mittels DHCP-Erweiterungen durchgeführt wird und eine Port-Mask-DHCP-Option ein Mask-Flag, MF, -Feld zum Markieren eines Portbereichs mit dem Attribut enthält.

11. Ein Verfahren nach Anspruch 10, wobei das Mask-Flag, MF, -Feld eine Länge von einem oder zwei Bytes aufweist.

12. Ein Verfahren nach Anspruch 10, wobei das Mask-Flag, MF, -Feld ein Flag für den Manager, MD, enthält, um dem Client anzuzeigen, nicht irgendwelche weiteren Ports oder Portnummern in dem jeweiligen Portbereich zu vergeben, und/oder wobei das Mask-Flag, MF, -Feld ein Flag für den Client, MA, enthält, um dem Manager (1) anzuzeigen, dass der Portbereich nicht mehr länger verwendet wird, und/oder
wobei dasselbe Flag verwendet wird, um dem Client durch den Manager (1) anzuzeigen, nicht irgendwelche weiteren Ports oder Portnummern in dem jeweiligen Portbereich zu vergeben, und um dem Manager (1) durch den Client anzuzeigen, dass der Portbereich nicht mehr länger in Verwendung ist.

13. Ein Verfahren nach Anspruch 9, wobei das Signalisieren zwischen dem Client und dem Manager mittels DHCP-Erweiterungen durchgeführt wird und eine Port-Mask-DHCP-Option mit einer definierbaren DID, DHCP Option ID, oder zwei definierbaren DIDs verwendet wird, um dem Client durch den Manger (1) anzuzeigen, nicht irgendwelche weiteren Ports oder Portnummern in dem jeweiligen Portbereich zu vergeben, und um dem Manager (1) durch den Client anzuzeigen, dass der Portbereich nicht mehr länger verwendet wird.

14. Ein Verfahren nach Anspruch 9, wobei das Signalisieren zwischen dem Client und dem Manager mittels PPP-Erweiterungen durchgeführt wird und eine definierbare PPP, Point-to-Point Protocol, IPCP, Internet Protocol Configuration Protocol, -Option verwendet wird, um dem Client durch den Manger (1) anzuzeigen, nicht irgendwelche weiteren Ports oder Portnummern in dem jeweiligen Portbereich zu vergeben, und um dem Manager (1) durch den Client anzuzeigen, dass der Portbereich nicht mehr länger in Verwendung ist.

15. Ein Netzwerk, wobei eine Netzwerkadresse und zumindest ein Portbereich, der der Netzwerkadresse zugeordnet ist und Ports oder Portnummern aufweist, mittels eines Adress- und/oder Portbereich-Managers (1) einem Client zugeordnet sind, wobei das Netzwerk Mittel zum Markieren eines oder mehrerer Portbereiche durch den Manager (1) mit einem Attribut umfasst, das dem Client signalisiert, nicht irgendwelche weiteren Ports oder Portnummern in markierten Portbereichen zu vergeben,
**gekennzeichnet durch** Mittel zum Überwachen **durch** den Manager (1) einer Verwendung von Ports oder Portnummern **durch** den Client und Mittel zum Durchführen des Markierens während eines Neuzuordnungsprozesses, der **durch** den Manager (1) als Reaktion auf von solchem Überwachen erhaltene Information initiiert wird.

## Revendications

1. Procédé d'exploitation d'un réseau, dans lequel une adresse de réseau et au moins une plage de ports associée à l'adresse de réseau et comprenant des ports ou des numéros de ports sont affectées à un dispositif client par un gestionnaire d'adresses et/ou de plages de ports (1) et dans lequel une ou plusieurs plages de ports sont marquées par le gestionnaire (1) avec un attribut qui signale au dispositif client de ne pas attribuer davantage de ports ou de numéros de ports dans les plages de ports marquées,
**caractérisé en ce que** le gestionnaire (1) surveille l'utilisation de ports ou de numéros de ports par un dispositif client, et le marquage est mis en oeuvre au cours d'un processus de réaffectation initié par le gestionnaire (1) en réponse à des informations obtenues à partir de cette surveillance.

2. Procédé selon la revendication 1, dans lequel le gestionnaire (1) surveille un degré de fragmentation d'un espace de ports formé par les ports ou les numéros de ports et/ou d'un espace d'adresses formé par les adresses de réseau ; et/ou
dans lequel le gestionnaire (1) envoie un message au dispositif client, le message contenant au moins une plage de ports marquée avec l'attribut, ou le message contenant au moins deux plages de ports, à savoir la plage de ports initialement affectée marquée avec l'attribut et au moins une nouvelle plage de ports.

3. Procédé selon la revendication 1 ou 2, dans lequel le gestionnaire (1) définit une période de temps en cours de laquelle la plage de ports initialement affectée est toujours valide ; et/ou dans lequel le gestionnaire (1) signale au dispositif client qu'une plage de ports n'est plus affectée au dispositif client.

4. Procédé selon l'une quelconque des revendications 1 à 3, dans lequel le dispositif client signale au gestionnaire (1) qu'une plage de ports n'est plus en cours d'utilisation.

5. Procédé selon l'une quelconque des revendications 1 à 4, dans lequel le gestionnaire (1) divise une plage de ports unique en deux plages de ports consécutives ou plus.

6. Procédé selon l'une quelconque des revendications 1 à 5, dans lequel le gestionnaire (1), ou une fonction de gestionnaire connexe, est délivré(e) au niveau de l'un d'un serveur d'accès distant à haut débit, BRAS, d'un noeud d'accès multiservice, MSAN, d'un multiplexeur d'accès de ligne d'abonné numérique, DSLAM, d'un noeud de support GPRS de service, SGSN, ou d'un noeud de service GPRS de transit, GGSN.

7. Procédé selon l'une quelconque des revendications 1 à 6, dans lequel le dispositif client est un routeur domestique, ou la passerelle d'une grande entreprise, ou dans lequel le dispositif client est situé sur un équipement d'utilisateur, UE.

8. Procédé selon l'une quelconque des revendications 1 à 7, dans lequel des politiques sont configurées dans le dispositif client et/ou le gestionnaire (1) en vue d'un traitement personnalisé du processus d'affectation ou de réaffectation,
dans lequel les politiques définissent un niveau d'usage auquel le dispositif client est autorisé à demander une plage de ports plus étendue.

9. Procédé selon l'une quelconque des revendications 1 à 8, dans lequel une signalisation entre le dispositif client et le gestionnaire (1) est mise en oeuvre par des extensions de protocole de configuration dynamique de l'hôte, DHCP, des extensions de protocole point à point, PPP, des services Web, la spécification de rapport technique 069, TR-69, ou un autre protocole de gestion de réserves de ports et d'adresses.

10. Procédé selon la revendication 9, dans lequel la signalisation entre le dispositif client et le gestionnaire est mise en oeuvre par des extensions de protocole DHCP, et une option de protocole DHCP de masque de port contient un champ de fanions de masque, MF, destiné à marquer une plage de ports avec l'attribut.

11. Procédé selon la revendication 10, dans lequel le champ de fanions de masque, MF, présente une longueur d'un ou deux octets.

12. Procédé selon la revendication 10, dans lequel le champ de fanions de masque, MF, contient un fanion pour le gestionnaire, MD, destiné à indiquer au dispositif client de ne pas attribuer davantage de ports ou de numéros de ports dans la plage de ports respective ; et/ou dans lequel le champ de fanions de masque, MF, contient un fanion, pour le dispositif client, MA, destiné à indiquer au gestionnaire (1) que la plage de ports n'est plus en cours d'utilisation ; et/ou dans lequel le même fanion est utilisé en vue d'indiquer, par le biais du gestionnaire (1), au dispositif client, de ne pas attribuer davantage de ports ou de numéros de ports dans la plage de ports respective, et en vue d'indiquer, par le biais du dispositif client, au gestionnaire (1), que la plage de ports n'est plus en cours d'utilisation.

13. Procédé selon la revendication 9, dans lequel la signalisation entre le dispositif client et le gestionnaire est mise en oeuvre par des extensions de protocole DHCP, et une option de protocole DHCP de masque de port avec un identifiant d'option de protocole DHCP, DID, définissable, ou deux identifiants DID définissables, est utilisée en vue d'indiquer, par le biais du gestionnaire (1), au dispositif client, de ne pas affecter davantage de ports ou de numéros de ports dans la plage de ports respective, et en vue d'indiquer, par le biais du dispositif client, au gestionnaire (1), que la plage de ports n'est plus en cours d'utilisation.

14. Procédé selon la revendication 9, dans lequel la signalisation entre le dispositif client et le gestionnaire est mise en oeuvre par des extensions de protocole PPP, et une option de protocole de configuration de protocole Internet/protocole point à point, IPCP/PPP, définissable, est utilisée en vue d'indiquer, par le biais du gestionnaire (1), au dispositif client, de ne pas affecter davantage de ports ou de numéros de ports dans la plage de ports respective, et de manière à indiquer, par le biais du dispositif client, au gestionnaire (1), que la plage de ports n'est plus en cours d'utilisation.

15. Réseau, dans lequel une adresse de réseau et au moins une plage de ports associée à l'adresse de réseau et comprenant des ports ou des numéros de ports, sont affectées à un dispositif client par un gestionnaire d'adresses et/ou de plages de ports (1), le réseau comprenant un moyen pour marquer une ou plusieurs plages de ports, par le biais du gestionnaire (1), avec un attribut qui signale au dispositif client de ne pas affecter davantage de ports ou de numéros de ports dans les plages de ports marquées,
**caractérisé par** un moyen pour surveiller l'utilisation, par un dispositif client, de ports ou de numéros de ports, par le biais du gestionnaire (1), et un moyen pour mettre en oeuvre le marquage au cours d'un processus de réaffectation initié par le gestionnaire (1) en réponse à des informations obtenues à partir de cette surveillance.
